# EUROPEAN PATENT APPLICATION

(11) **EP 1 612 438 A1**
(43) Date of publication of application: **04.01.2006**
(21) Application number: 04721633.8
(22) Date of filing: 18.03.2004
(51) Int. Cl.: F16D 3/205

(54) **CONSTANT VELOCITY JOINT AND METHOD OF MANUFACTURING THE SAME**

(30) Priority: 08.04.2003 JP 2003104092; 10.03.2004 JP 2004067949; 17.03.2004 JP 2004076205
(71) Applicant: HONDA MOTOR CO., Ltd., Tokyo 107-8556 (JP)
(72) Inventor: KAWAKATSU, Tsutomu, c/o HONDA GIKEN KOGYO KK, Mooka-shi, Tochigi 321-4346 (JP); SHIBATA, Naoto, c/o HONDA GIKEN KOGYO KK, Mooka-shi, Tochigi 32-4346 (JP); OGURA, Takahiro, c/o HONDA GIKEN KOGYO KK, Mooka-shi, Tochigi 321-4346 (JP); AOYAMA, Tomonori, c/o HONDA GIKEN KOGYO KK, Mooka-shi, Tochigi 321-4346 (JP); KOSUGI, Masanori, c/o HONDA MOTOR CO., LTD., Tokyo 107-8556 (JP)
(74) Representative: Klunker . Schmitt-Nilson . Hirsch
(86) International application number: PCT/JP2004/003627
(87) International publication number: WO 2004/090364

(57) **Abstract**

Roller members (30) of a constant velocity universal joint (10) are externally fitted to trunnions (26a to 26c) with a plurality of needle bearings (28) interposed between the roller members (30) and the trunnions (26a to 26c). The roller member (30) has an inner diameter portion having an L-shaped cross section by a flange section (40) which protrudes radially inwardly and an annular recess section (42) which is provided and defined by a gap with respect to the trunnion (26a to 26c). The plurality of needle bearings (28) are retained on the inner diameter portion of the roller member (30) by paste wax.

## Description

### TECHNICAL FIELD

The present invention relates to a constant velocity universal joint which connects one transmission shaft to the other transmission shaft, for example, in a driving force-transmitting section of an automobile, and a method of assembling the same.

### BACKGROUND ART

A constant velocity universal joint, which connects one transmission shaft to the other transmission shaft and which transmits the rotary force to respective axles, has been hitherto used in a driving force-transmitting section of an automobile.

In relation to the constant velocity universal joint of this type, the present applicant has proposed, in Japanese Laid-Open Patent Publication No. 11-210776, a constant velocity universal joint which makes it possible to improve the durability by reducing the contact surface pressure between a needle bearing and a trunnion.

### DISCLOSURE OF THE INVENTION

A general object of the present invention is to provide a constant velocity universal joint in which rolling members are conveniently held or retained.

A principal object of the present invention is to provide a method of producing a constant velocity universal joint, which is designed to make it possible to realize a convenient operation for installing rolling members.

Another object of the present invention is to provide a method of producing a constant velocity universal joint, which makes it possible to improve the productivity of the constant velocity universal joint and reduce the production cost.

According to one aspect of the present invention, there is provided a constant velocity universal joint comprising a cylindrical outer member which is connected to one transmission shaft and which is provided with a plurality of guide grooves separated from each other by predetermined distances and extending in an axial direction on an inner circumferential surface, and an inner member which is inserted into an open inner space of the outer member and which is connected to the other transmission shaft, the constant velocity universal joint including:
a plurality of trunnions which are expanded toward the guide grooves;
ring-shaped roller members which contact the guide grooves and which are externally fitted to the trunnions; and
a plurality of rolling members which are interposed rollably between the trunnions and the roller members,
wherein the plurality of rolling members are retained by paste wax which is adhered to inner diameter portions of the roller members when the plurality of rolling members are installed to the inner diameter portions of the roller members.

According to another aspect of the present invention, there is provided a constant velocity universal joint comprising a cylindrical outer member which is connected to one transmission shaft and which is provided with a plurality of guide grooves separated from each other by predetermined distances and extending in an axial direction on an inner circumferential surface, and an inner member which is inserted into an open inner space of the outer member and which is connected to the other transmission shaft, the constant velocity universal joint including:
a plurality of trunnions which are expanded toward the guide grooves;
ring-shaped roller members which contact the guide grooves and which are externally fitted to the trunnions; and
a plurality of rolling members which are interposed rollably between the trunnions and the roller members,
wherein solid wax is melted and supplied in a liquid state to inner diameter portions of the roller members, and the plurality of rolling members are retained on the inner diameter portions of the roller members by the solid wax which is thereafter solidified.

That is, in the present invention, the rolling members are installed and retained on the inner diameter portions of the roller members by the paste wax or the solid wax. That is, according to the present invention, it is unnecessary to retain the rolling members by means of the keystone effect (see Japanese Laid-Open Patent Publication No. 11-210776) unlike the conventional technique. Further, it is possible to prevent the rolling members from being disengaged. Therefore, it is possible to realize the convenient operation for installing the rolling members.

In the present invention, the term "paste wax" refers to an oil and fat material which has a consistency of less than 300 at ordinary temperature. The term "consistency" means the consistence of an extremely viscous substance to resist deformation. According to JIS (Japanese Industrial Standard) K2220-5.3.2, the consistency is determined such that: a cone having a predetermined shape (mass: 102.5 ± 0.05 g) is moved perpendicularly into a sample for 5.0 ± 0.1 seconds together with a holding section (mass: 45.50 ± 0.02 g); the depth of movement obtained in the vertical direction in this procedure is measured; and a reading of the index is multiplied by 10.

On the other hand, the term "solid wax" refers to a material which is solid at room temperature and which is melted into liquid having a relatively low viscosity by being warmed or heated to about 70° to 100° C. Specific examples of the solid wax as described above include ester of fatty acid and alcohol. The solid wax makes it possible to reduce the production cost of the constant velocity universal joint, because the solid wax is inexpensive. The solid wax is referred to as "rou" in Japanese.

In the present invention, it is preferable that the inner diameter portion of the roller member has an L-shaped cross section by an annular recess section and a single flange section which protrudes radially inwardly. Accordingly, it is possible to improve the processability of the inner diameter portion of the roller member.

Alternatively, the shape of the inner diameter portion of the roller member may have an L-shaped cross section. Also in this arrangement, it is possible to improve the processability of the inner diameter portion of the roller member.

In this arrangement, the inner diameter portion of the roller member may be constructed to have a pair of flange sections which are formed at both ends in the axial direction and each of which protrudes radially inwardly by a predetermined length, and an annular recess section which is formed between the pair of flange sections.

It is preferable that a holding member is installed to the inner diameter portion of the roller member having the L-shaped cross section.

It is also preferable that the trunnion comprises a columnar section which has a constant outer diameter, and a diametrally expanded section which is larger than the outer diameter of the columnar section; and a circumferential surface portion, which is disposed at a boundary between the columnar section and the diametrally expanded section, has a radius of curvature which is larger than a length of the outer diameter of columnar section multiplied by 0.1 (the outer diameter of columnar section x 0.1). Accordingly, it is possible to secure the shaft strength of the trunnion by avoiding concentration of the stress on the stepped section disposed between the columnar section and the diametrally expanded section.

It is also preferable that an annular member, which surrounds a circumferential surface portion of the trunnion, is installed to a base of the trunnion. When the radius of curvature of the base is large, it is possible to improve the shaft strength of the trunnion by avoiding any concentration of the stress.

According to still another aspect of the present invention, there is provided a method of producing a constant velocity universal joint comprising a cylindrical outer member which is provided with a plurality of guide grooves separated from each other by predetermined distances and extending in an axial direction on an inner circumferential surface, a spider which is provided in an open inner space of the outer member and which is provided with a plurality of trunnions expanded toward the guide grooves, and ring-shaped roller members which contact the guide grooves and which are externally fitted to the trunnions, the method of producing the constant velocity universal joint comprising:
supplying paste wax to an inner diameter portion of the roller member;
providing a plurality of rolling members to the inner diameter portion of the roller member to retain the plurality of provided rolling members on the roller member by the paste wax; and
fitting the roller member on which the rolling members are retained to the trunnion of the spider.

According to still another aspect of the present invention, there is provided a method of producing a constant velocity universal joint comprising a cylindrical outer member which is provided with a plurality of guide grooves separated from each other by predetermined distances and extending in an axial direction on an inner circumferential surface, a spider which is provided in an open inner space of the outer member and which is provided with a plurality of trunnions expanded toward the guide grooves, and ring-shaped roller members which contact the guide grooves and which are externally fitted to the trunnions, the method of producing the constant velocity universal joint comprising:
providing a plurality of rolling members to the inner diameter portion of the roller member;
supplying paste wax to the inner diameter portion of the roller member to retain the plurality of provided rolling members on the roller member by means of the paste wax; and
fitting the roller member on which the rolling members are retained to the trunnion of the spider.

In any one of the production methods, the plurality of rolling members are retained on the inner diameter portion of the roller member by the paste wax. Therefore, it is unnecessary to retain the rolling members by using the keystone effect. Further, it is possible to avoid the disengagement of the rolling members. Therefore, it is possible to realize the convenient operation for installing the rolling members.

In this case, it is preferable to use the paste wax which has a consistency lower than that of a lubricating grease enclosed in the inner space of the outer member and which has a consistency according to the Japanese Industrial Standard of not less than 50 and less than 300, for the following reason. In this case, even when the paste wax and the lubricating grease are present in a mixed manner in the inner space of the outer member, it is possible to avoid any influence exerted on the performance of the lubricating grease.

According to still another aspect of the present invention, there is provided a method of producing a constant velocity universal joint, comprising:
a first step of providing a plurality of rolling members to the inner diameter portion of the roller member;
a second step of fitting the roller member provided with the rolling members to the trunnion of the spider; and
a third step of engaging the roller member with the guide groove,
wherein a solid wax-retaining step is performed such that melted solid wax is supplied to the plurality of provided rolling members, and the solid wax is solidified to retain the rolling members on the roller member.

In this aspect, the solid wax-retaining step may be performed before the first step. In this case, the rolling members, to which the melted solid wax is adhered, may be provided into the inner diameter portion of the roller member. The solid wax-retaining step may be performed before the second step, or the solid wax-retaining step may be performed before or after the third step. Alternatively, the solid wax-retaining step may be performed a plurality of times, for example, before the second step and after the third step.

As described above, when the plurality of rolling members are retained on the inner diameter portions of the roller members by the solid wax, it is also unnecessary to retain the rolling members by using the keystone effect. Further, it is possible to avoid any disengagement of the rolling members. Therefore, it is possible to realize the convenient operation for installing the rolling members.

The melted solid wax has a relatively low viscosity. Therefore, the melted solid wax quickly and reliably arrives at the abutment surfaces of the roller members and the rolling members. Accordingly, the rolling members can be retained on the inner diameter portions of the roller members reliably and efficiently by the solid wax.

It is also preferable that a solid wax-removing step of melding and removing the solid wax having been solidified in the solid wax-retaining step is performed. The solid wax-removing step is preferably performed before or after the third step.

In this procedure, it is possible to reliably prevent the solid wax from causing any chemical reaction with a joint boot for surrounding the constant velocity universal joint and/or a lubricating grease to be enclosed in the joint boot. Consequently, it is possible to avoid any change of quality of the joint boot and the lubricating grease.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a magnified vertical sectional view illustrating major parts in a direction perpendicular to the longitudinal direction of a constant velocity universal joint according to a first embodiment;
FIG. 2 is a vertical sectional view illustrating a roller member of the constant velocity universal joint shown in FIG. 1;
FIG. 3 is a magnified vertical sectional view illustrating major parts of the constant velocity universal joint shown in FIG. 1;
FIG. 4 is a sectional view taken along a line IV-IV as indicated by arrows shown in FIG. 3;
FIG. 5 is a partial vertical sectional view illustrating a constant velocity universal joint according to a first modified embodiment of the first embodiment;
FIG. 6 is a partial vertical sectional view illustrating a constant velocity universal joint according to a second modified embodiment of the first embodiment;
FIG. 7 is a partial vertical sectional view illustrating a constant velocity universal joint according to a third modified embodiment of the first embodiment;
FIG. 8 is a partial vertical sectional view illustrating a constant velocity universal joint according to a fourth modified embodiment of the first embodiment;
FIG. 9 is a partial vertical sectional view in which a washer is installed to an inner diameter portion of the roller member shown in FIG. 1;
FIG. 10 is a partial vertical sectional view in which a flat washer is installed in place of the washer shown in FIG. 7;
FIG. 11 is characteristics illustrating the relationship between the consistency of paste wax and various characteristics of the needle bearing;
FIG. 12 is a lateral sectional view illustrating a state in which a plurality of needle bearings are provided between a jig and an annular recess section of a roller member in accordance with a first method;
FIG. 13 is a lateral sectional view illustrating a state in which the paste wax is injected into the space between the jig and the annular recess section of the roller member after charging the needle bearings as shown in FIG. 12;
FIG. 14 is a lateral sectional view illustrating a state in which the paste wax is injected into the space between the jig and the annular recess section of the roller member before charging the needle bearings in accordance with a second method;
FIG. 15 is a lateral sectional view illustrating a state in which the paste wax is applied along the annular recess section of the roller member in accordance with a third method;
FIG. 16 is a lateral sectional view illustrating a state in which the needle bearings are provided along the annular recess section after applying the paste wax as shown in FIG. 15;
FIG. 17 is a lateral sectional view illustrating a state in which the paste wax is further applied along the inner circumferential surfaces of the needle bearings arranged annularly as shown in FIG. 16;
FIG. 18 is a lateral sectional view illustrating a state in which the paste wax is injected into a hole of the roller member in accordance with a fourth method;
FIG. 19 is a lateral sectional view illustrating a state in which the needle bearings are inserted into the injected paste wax as shown in FIG. 18;
FIG. 20 is a magnified horizontal sectional view illustrating major parts of a constant velocity universal joint according to a second embodiment;
FIG. 21 shows a flow chart for producing the constant velocity universal joint shown in FIG. 20;
FIG. 22 is a horizontal sectional view illustrating a state in which a plurality of needle bearings are provided between a jig and an annular recess section of a roller member;
FIG. 23 is a horizontal sectional view illustrating a state in which the space between an outer circumferential surface of the jig and the annular recess section of the roller member is filled with solid wax;
FIG. 24 is a horizontal sectional view illustrating a state in which the roller member, which accompanies the plurality of needle bearings retained on an inner diameter portion by the aid of the solid wax, is removed from the jig;
FIG. 25 shows another flow chart for producing the constant velocity universal joint shown in FIG. 20;
FIG. 26 is a horizontal sectional view illustrating a state in which the needle bearings are arranged on the inner diameter portion of the roller member;
FIG. 27 is a horizontal sectional view illustrating a state in which the gap between the jig and the roller member fitted onto the jig is filled with melted solid wax; and
FIG. 28 is a horizontal sectional view illustrating a state in which the needle bearings are inserted into the gap after being filled with the solid wax.

### BEST MODE FOR CARRYING OUT THE INVENTION

The constant velocity universal joint according to the present invention will be explained in detail below with reference to the accompanying drawings as exemplified by preferred embodiments in relation to the method of producing the same.

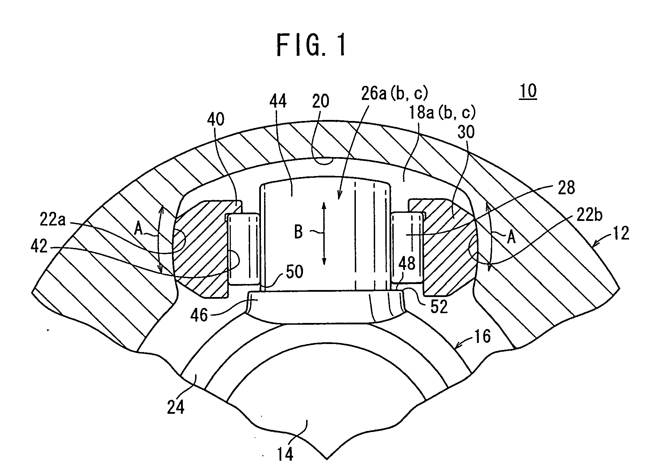

FIG. 1 shows a magnified vertical sectional view illustrating major parts of a constant velocity universal joint according to a first embodiment. The constant velocity universal joint 10 comprises a cylindrical outer cup (outer member) 12 which has a hole and which is connected to one end of an unillustrated first shaft, and an inner member 16 which is secured to one end of a second shaft 14 and which is accommodated in the hole of the outer cup 12.

As shown in FIG. 1, three guide grooves 18a to 18c, which extend in the axial direction and which are disposed at intervals of 120° about the axial center respectively, are formed on the inner wall surface of the outer cup 12. Each of the guide grooves 18a to 18c includes a ceiling section 20 which has a cross section formed into a gentle curved shape, and sliding movement sections 22a, 22b which are opposed to one another on both sides of the ceiling section 20 and each of which has a cross section formed into a circular arc shape.

A ring-shaped spider 24 is externally fitted to the second shaft 14. Three trunnions 26a to 26c, which are expanded toward the guide grooves 18a to 18c respectively and which are disposed at intervals of 120° about the axial center, are integrally formed on the outer circumferential surface of the spider 24.

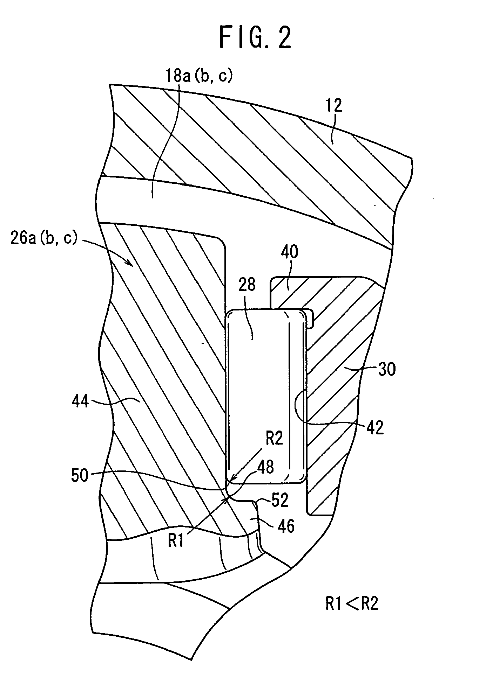

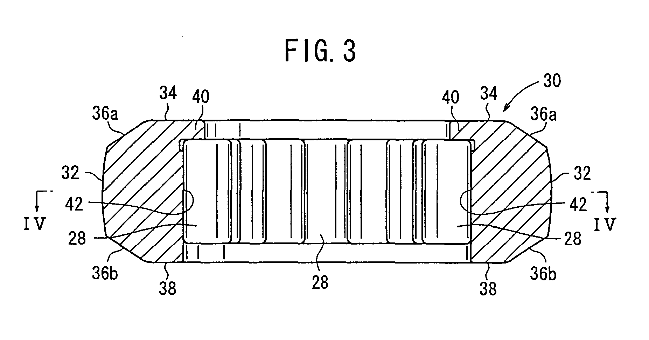

As shown in FIG. 2 in a magnified manner, a ring-shaped roller member 30 is externally fitted to the outer circumference of each of the trunnions 26a to 26c with a plurality of needle bearings (rolling members) 28 interposing therebetween. As shown in FIG. 3, the outer circumferential surface of the roller member 30 comprises a circular arc-shaped surface section 32 which corresponds to the cross-sectional shape of the sliding movement sections 22a, 22b to make surface-to-surface contact with the sliding movement section 22a, 22b, a first annular inclined surface section 36a which is continued from the circular arc-shaped surface section 32 to an upper surface 34, and a second annular inclined surface section 36b which is continued from the circular arc-shaped surface section 32 to a lower surface 38.

A single flange section 40, which is formed to protrude radially inwardly by a predetermined length, is provided at an upper portion (end portion) of the inner circumferential surface of the roller member 30. On the other hand, no part protrudes radially inwardly on the lower side of the flange section 40. An annular recess section 42 is formed with the gap with respect to the outer circumferential surface of each of the trunnions 26a to 26c. In other words, the inner diameter portion of the roller member 30 is formed to have an L-shaped cross section by the flange section 40 and the annular recess section 42.

The plurality of needle bearings 28 are aligned substantially in parallel in the circumferential direction on the inner diameter portion of the roller member 30. The needle bearings 28 are retained, for example, by paste wax applied to the wall surface of the inner diameter portion so that the needle bearings 28 are not disengaged from the inner diameter portion of the roller member 30 as described later on. In this arrangement, the plurality of needle bearings 28, which are installed along the inner diameter portion of the roller member 30, have substantially the same diameter respectively, and they have substantially the same shape.

As shown in FIG. 1, each of the trunnions 26a to 26c comprises a columnar section 44 which has a constant outer diameter, and a diametrally expanded section 46 which is provided on the lower side of the columnar section 44 disposed in the vicinity of the spider 24 and which is larger than the outer diameter of the columnar section 44.

As shown in FIG. 2, a circumferential surface section 48 having a radius of curvature R1 is formed at the boundary portion between the columnar section 44 and the diametrally expanded section 46, i.e., at the base of the columnar section 44 disposed proximately to the diametrally expanded section 46.

In this arrangement, the radius of curvature R1 of the circumferential surface section 48 is smaller than a radius of curvature R2 of an end corner section 50 of the needle bearing 28 faced to the circumferential surface section 48 (i.e., R1 < R2). Because the radius of curvature R1 of the circumferential surface section 48 of the base of each of the trunnions 26a to 26c is smaller than the radius of curvature R2 of the end corner section 50 of the needle bearing 28 as described above, the end of the needle bearing 28 abuts against the wall surface 52 of the diametrally expanded section 46 disposed proximately to the circumferential surface section 48 to regulate the displacement thereof when the needle bearing 28 is moved in the axial direction of each of the trunnions 26a to 26c between the trunnions 26a to 26c and the roller member 30.

The constant velocity universal joint 10 according to the first embodiment is basically constructed as described above. Next, its operation, function, and effect will be explained.

When the unillustrated first shaft is rotated, the rotary force is transmitted to the inner member 16 via the outer cup 12, and the second shaft 14 is rotated in a predetermined direction by the trunnions 26a to 26c.

That is, the rotary force of the outer cup 12 is transmitted to the trunnions 26a to 26c via the roller members 30 which make the surface-to-surface contact with the sliding movement sections 22a, 22b of the guide grooves 18a to 18c and the plurality of needle bearings 28 which are retained on the annular recess sections 42 of the roller members 30. Accordingly, the second shaft 14, which is engaged with the trunnions 26a to 26c, is finally rotated.

In this arrangement, when the second shaft 14 is inclined by a predetermined angle with respect to the outer cup 12 having the first shaft, the trunnions 26a to 26c, each of which is formed to have the columnar shape, make the rotational movement about the center of the axial center thereof. The roller members 30 make the sliding displacement in the direction of the arrow A (see FIG. 1) along the circular arc-shaped sliding movement sections 22a, 22b in accordance with the rotational movement.

The trunnions 26a to 26c are displaced in the axial direction (direction of the arrow B) of the trunnions 26a to 26c while making line-to-line contact with the plurality of needle bearings 28 (see FIG. 1).

Further, the trunnions 26a to 26c are displaced in the direction substantially perpendicular to the axis of the trunnions 26a to 26c (direction perpendicular to the sheet surface of FIG. 1) under the rolling action of the plurality of needle bearings 28.

Accordingly, the rotary motion of the first shaft is smoothly transmitted to the second shaft 14 without being affected by the angle of inclination of the second shaft 14 with respect to the outer cup 12.

In the first embodiment, the flange section 40 is provided at only one end (upper portion) of the inner diameter portion of the roller member 30, and the other end forms the annular recess section 42 with the gap with respect to the trunnions 26a to 26c so that the inner diameter portion of the roller member 30 is formed to have the L-shaped cross section. Accordingly, it is possible to improve the processability of the inner diameter portion of the roller member 30. As a result, it is possible to improve the productivity of the constant velocity universal joint 10, and it is possible to reduce the production cost, for the following reason.

For example, an unillustrated polishing grinding wheel can be advanced to arrive at the inner diameter portion of the roller member 30 with ease through the gap at which the flange section 40 is not formed. It is possible to conveniently perform, for example the polishing process and the finishing process for the inner diameter portion of the roller member 30. Further, grinding dust can be preferably discharged to the outside from the gap.

In the first embodiment, the plurality of needle bearings 28 are retained by the solid wax applied to the wall surface of the inner diameter portion of the roller member 30. Accordingly, for example, it is unnecessary to adopt the method of installing the needle bearings 28 by utilizing the conventional keystone effect. Further, the needle bearings 28 are prevented from any disengagement. Therefore, it is possible to realize the simple operation for installing the needle bearings 28 to the inner diameter portion of the roller member 30.

Accordingly, it is possible to realize the convenient operation for assembling the constant velocity universal joint 10. Thus, the productivity is improved, and it is possible to further reduce the production cost. Further, the needle bearings 28 are installed to the inner diameter portion of the roller member 30 without utilizing the keystone effect. Therefore, the dimensional restriction on the size of the needle bearing 28, the distance between the needle bearings 28 or the like is eased as compared with the case in which the keystone effect is utilized. Therefore, it is possible to simplify the operation for processing the inner diameter portion of the roller member 30.

Further, the plurality of needle bearings 28 are retained on the inner diameter portion of the roller member 30 by the aid of the solid wax. Accordingly, for example, even when vibration or the like is applied to the roller member 30 in the operation for transporting or assembling the roller member 30, it is possible to easily avoid the collapse and the disengagement of the needle bearings 28 from the inner diameter portion of the roller member 30.

When the inner diameter portion of the roller member 30 has the L-shaped cross section, it is necessary to limit the movement in the axial direction of the trunnion of the plurality of needle bearings 28, which are retained on the inner diameter portion of the roller member 30, to secure the appropriate abutment surfaces between the ends of the needle bearings 28 and the trunnions 26a to 26c. Accordingly, in order to avoid interference between the end corner section 50 of the needle bearing 28 and each of the trunnions 26a to 26c, the radius of curvature R1 of the curved surface section 48 of the base of each of the trunnions 26a to 26c is smaller than the radius of curvature R2 of the end corner section 50 of the needle bearing 28 so that the wall surface 52 of the diametrally expanded section 46 formed in the vicinity of the circumferential surface section 48 can function as the abutment surface.

In this arrangement, considering the concentration of the stress on the stepped portion between the columnar section 44 and the diametrally expanded section 46, it is preferable that the radius of curvature R1 of the circumferential surface section 48 of the base of each of the trunnions 26a to 26c is larger than (outer diameter of columnar section 44) x 0.1.

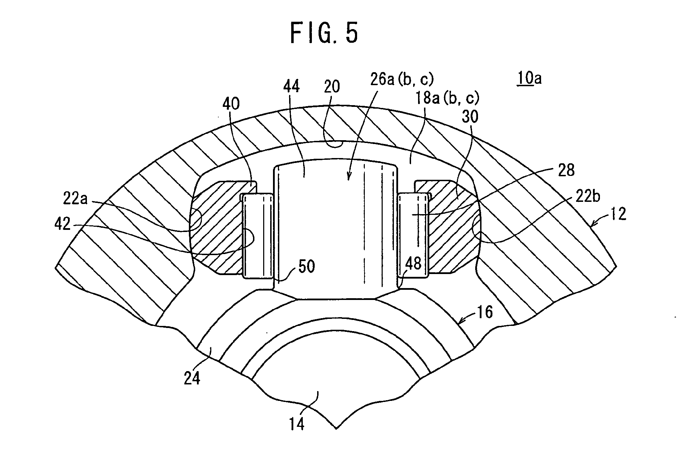

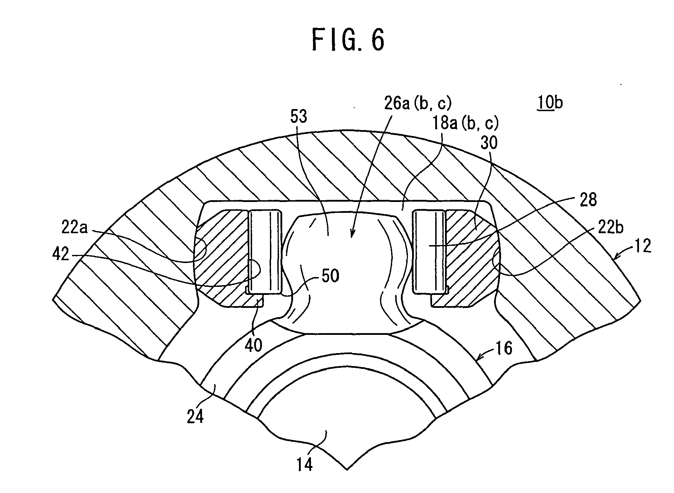

It is not necessarily indispensable that the diametrally expanded section 46 is provided for each of the trunnions 26a to 26c. As shown in FIG. 5, the trunnions 26a to 26c may be formed by using only the columnar section 44. Alternatively, as shown in FIG. 6, a spherical surface section 53 may be provided on each of the trunnions 26a to 26c. In the arrangement shown in FIG. 6, the roller member 30 is provided upside down in a reversed manner as compared with FIG. 1, which is assembled so that the flange section 40 is disposed on the lower side.

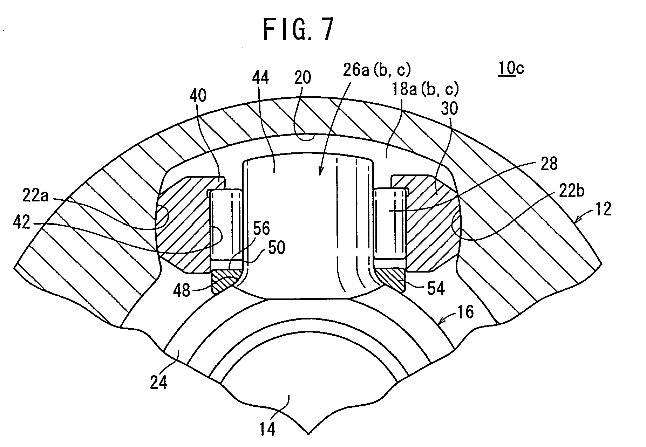

Alternatively, as shown in FIG. 7, a ring-shaped washer (annular member) 54, which surrounds the base of each of the trunnions 26a to 36c, may be provided in order to increase the shaft strength of the trunnions 26a to 36c. In this arrangement, the radius of curvature R1 of the circumferential surface section 48 of each of the trunnions 26a to 26c can be larger than the radius of curvature R2 of the end corner section 50 of the needle bearing 28 so that the concentration of the stress is avoided. Further, the end corner section 50 of the needle bearing 28 abuts against the washer 54, thereby avoiding any interference. An annular flat surface 56, against which the needle bearings 28 abut, is formed on the washer 54.

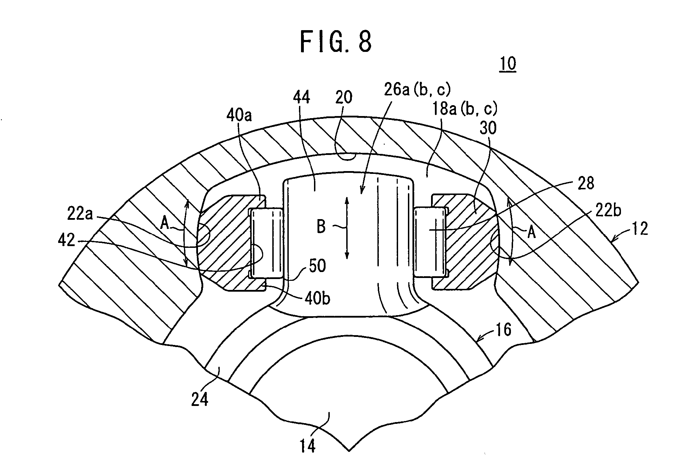

The shape of the inner diameter portion of the roller member 30 is not specifically limited to the L-shaped cross section described above. For example, as shown in FIG. 8, the following shape is also available. That is, a pair of flange sections 40a, 40b, which are separated from each other by a predetermined distance in the axial direction of the trunnion 26a and which protrude radially inwardly by a predetermined length, may be formed, and the annular recess section 42 may be formed between the flange sections 40a, 40b.

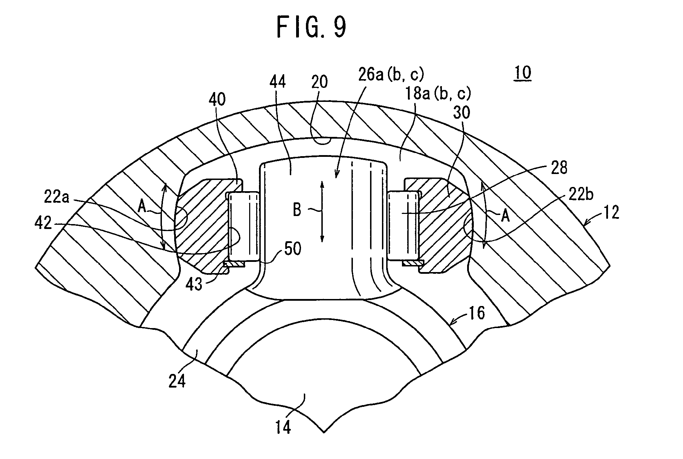

Alternatively, as shown in FIG. 9, a holding member 43 may be installed to an annular groove on the inner diameter portion of the roller member 30 formed to have the L-shaped cross section as described above. The holding member 43 retains the plurality of needle bearings 28 which are interposed between the roller member 30 and each of the trunnions 26a to 26c. Preferred examples of the holding member 43, to which the present invention is not specifically limited, include circlips, clips, forcibly insertable members, spring lock washers, spring washers, washers, snap rings, retaining rings, spring metal washers, grip snap rings, and rings.

The rolling member is not limited to the needle bearing 28 described above, which may be rolling bearings including rollers.

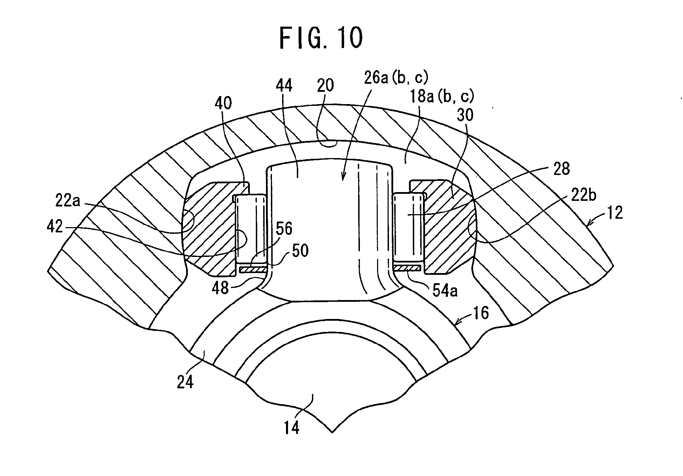

As shown in FIG. 10, a flat washer 54a, which has an annular flat surface 56, may be used in place of the washer 54.

The constant velocity universal joint 10 constructed as described above can be produced as follows.

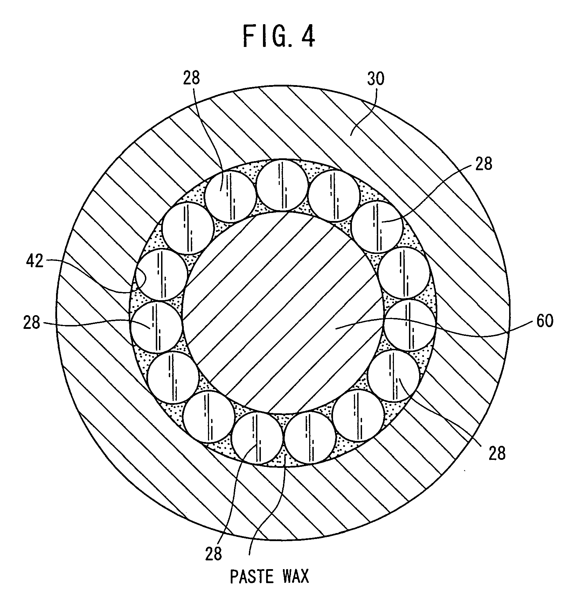

First, the paste wax is previously applied to the wall surface of the annular recess section 42 formed on the inner diameter portion of the roller member 30, and the plurality of needle bearings 28 are installed along the annular recess section 42. Therefore, the plurality of needle bearings 28, which are installed to the annular recess section 42 of the roller member 30, are retained by the paste wax applied to the wall surface of the annular recess section 42. Accordingly, the plurality of needle bearings 28 are prevented from being disengaged from the annular recess section 42 during the operations of transport and assembling (see FIGS. 2 and 4).

In this procedure, as shown in FIG. 4, when the paste wax is present on both of the inner circumferential side and the outer circumferential side of the plurality of needle bearings 28 arranged annularly along the annular recess section 42 of the roller member 30, the needle bearings 28 are preferably retained on the roller member 30.

It is preferable that the paste wax comprises the oil/fat component which has a fluidity smaller than that of the lubricating grease to be enclosed in the outer cup 12 by an unillustrated joint boot, which has a viscosity harder than that of the lubricating grease, and which has a low consistency. That is, in this arrangement, the material, which is selected as the paste wax, does not affect the performance of the lubricating grease even when the material exists in a mixed manner together with the lubricating grease to be enclosed in the outer cup 12 when the constant velocity universal joint 10 is assembled.

It is preferable that the amount of application of the paste wax is not less than about 0.3 g. If the amount of application of the paste wax is less than 0.3 g, then the retaining force exerted on the needle bearings 28 may be insufficient, and the needle bearings 28 may be disengaged during the transport of the roller member 30 after the assembling. On the other hand, the upper limit of the amount of application of the paste wax is appropriately set to such an amount that the characteristics of the lubricating grease are not deteriorated, in view of the fact that the amount of the lubricating grease to be enclosed in the hole of the outer cup 12 is about one hundred and several tens of grams. When the major component of the paste wax is the same as the thickening agent, the base oil, or the additive of the lubricating grease, the amount of application of the paste wax can be increased as compared with a case in which the components as described above are not identical with each other. Alternatively, the components of the lubricating grease may be set and adjusted after mixing the paste wax.

The consistency of the paste wax may be appropriately set and adjusted, for example, in view of the size and the mass of the needle bearing 28 and/or the shock and the atmosphere temperature to be applied to the roller member 30.

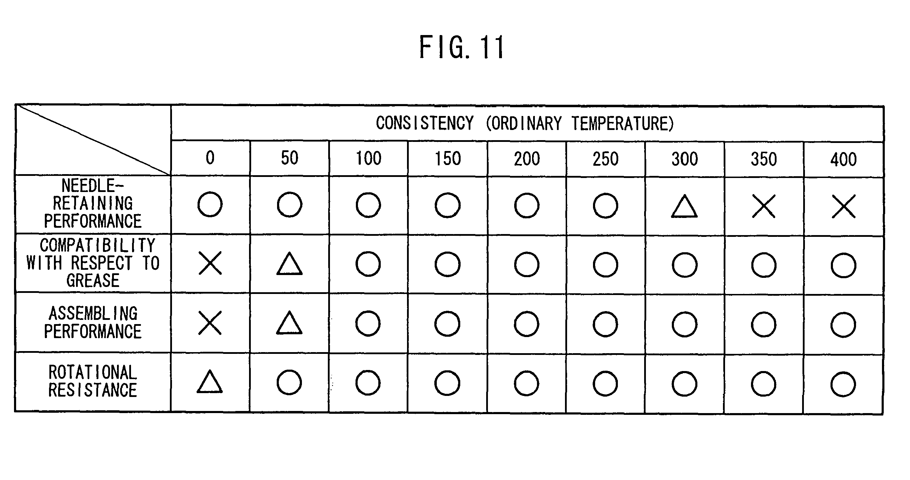

The relationship between the consistency (Japanese Industrial Standard) of the paste wax and various characteristics of the needle bearing 28 is shown in FIG. 11. In FIG. 11, circles indicate satisfactory property or performance, triangles indicate ordinary property or performance, and crosses indicate unsatisfactory property or performance.

As clearly appreciated from FIG. 11, in the first embodiment, the paste wax having consistencies of not less than 50 and less than 300 is preferred, and the paste wax having consistencies of not less than 100 and less than 250 is more preferred. When the paste wax having the consistency within the range as described above is selected; the satisfactory needle-retaining performance is provided, the satisfactory compatibility with respect to the grease is provided so that the paste wax is more compatible with the lubricating grease, the satisfactory assembling performance is provided for the needle bearing 28, and it is possible to obtain the smooth rotational resistance of the needle bearing 28 at an initial stage.

If the consistency of the paste wax is less than 50, the compatibility with respect to the grease and the assembling performance may be deteriorated due to the excessive hardness of the paste wax. On the other hand, if the consistency of the paste wax is not less than 300, the retaining force exerted on the needle bearing 28 is decreased due to the increased fluidity of the paste wax.

Even in the case of the paste wax having a low consistency, the fluidity may be improved by being heated, and thus the consistency may be increased in use.

Finally, as shown in FIG. 1, the roller member 30, for which the plurality of needle bearings 28 are retained on the inner diameter portion by the paste wax, is fitted onto each of the trunnions 26a to 26c of the spider 24. Thus, the operation for assembling the roller member 30 and the needle bearings 28 to the trunnions 26a to 26c of the spider 24 is completed.

The paste wax can be supplied to the annular recess section 42 of the roller member 30 as follows, for example.

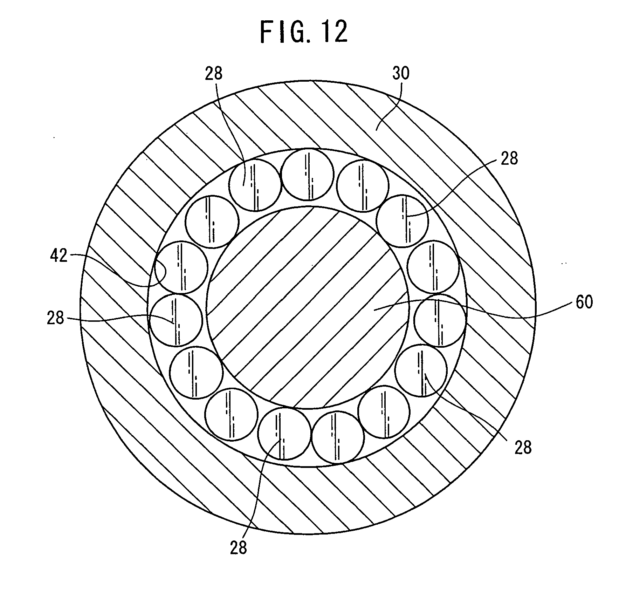

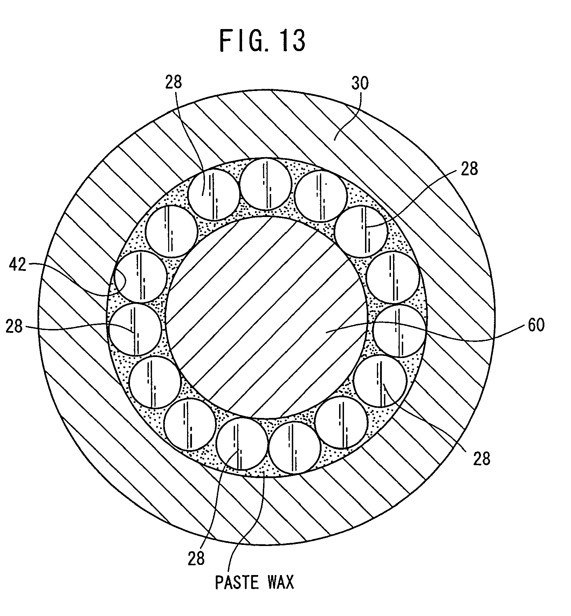

A first method is shown in FIG. 12, in which the plurality of needle bearings 28 are provided annularly along the space between the annular recess section 42 of the roller member 30 and an outer circumferential surface of a jig 60. Subsequently, as shown in FIG. 13, the paste wax is poured or injected into the space between the annular recess section 42 of the roller member 30 and the outer circumferential surface of the jig 60. Thus, the plurality of needle bearings 28 are retained by the paste wax.

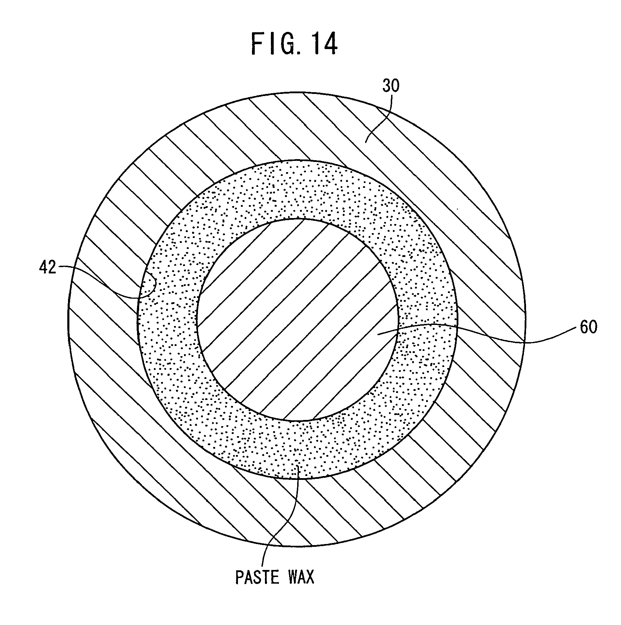

In a second method, the providing of the needle bearings 28 and the injection of the paste wax are performed reversely to the above. As shown in FIG. 14, the paste wax may be previously injected into the space between the annular recess section 42 of the roller member 30 and the outer circumferential surface of the jig 60, and then the plurality of needle bearings 28 may be provided into the paste wax (see FIG. 13).

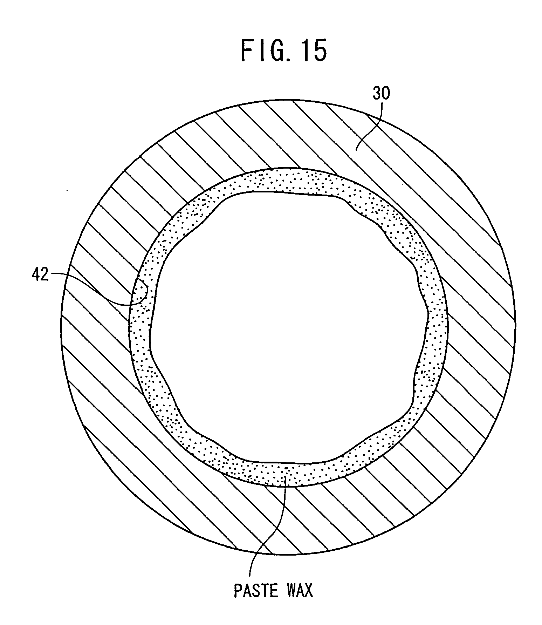

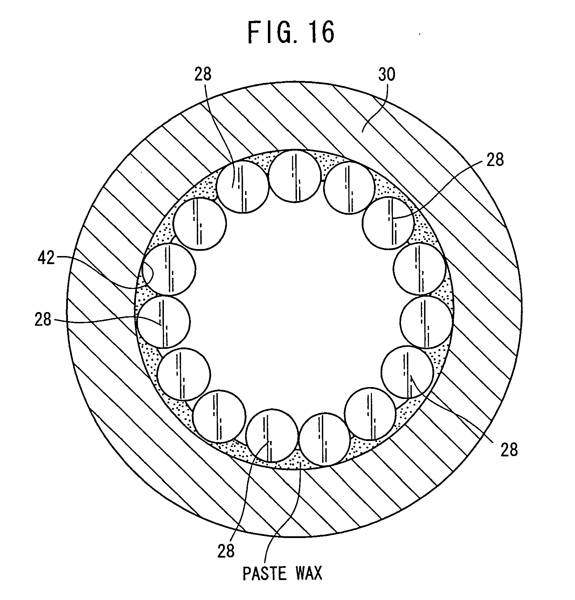

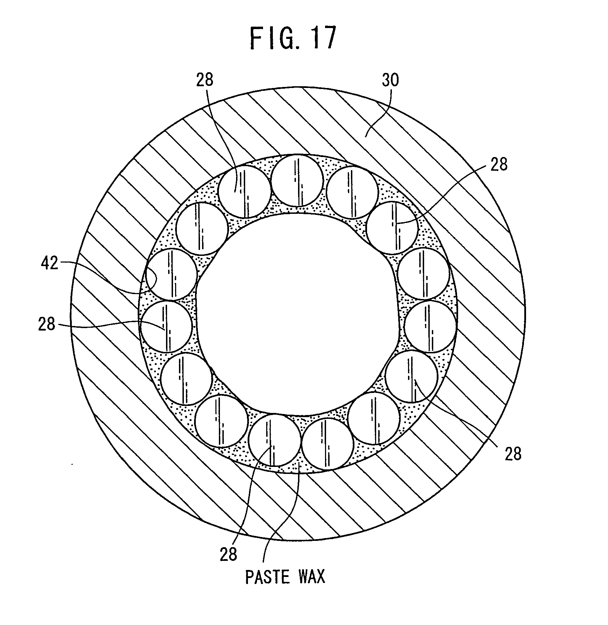

In a third method, a predetermined amount of the paste wax is firstly applied to the wall surface of the annular recess section 42 of the roller member 30 as shown in FIG. 15, and then the plurality of needle bearings 28 are provided along the annular recess section 42 of the roller member 30 as shown in FIG. 16. Further, as shown in FIG. 17, a predetermined amount of the paste wax is applied again from the inner circumferential side of the plurality of annularly arranged needle bearings 28. Accordingly, the needle bearings 28 are retained by the paste wax.

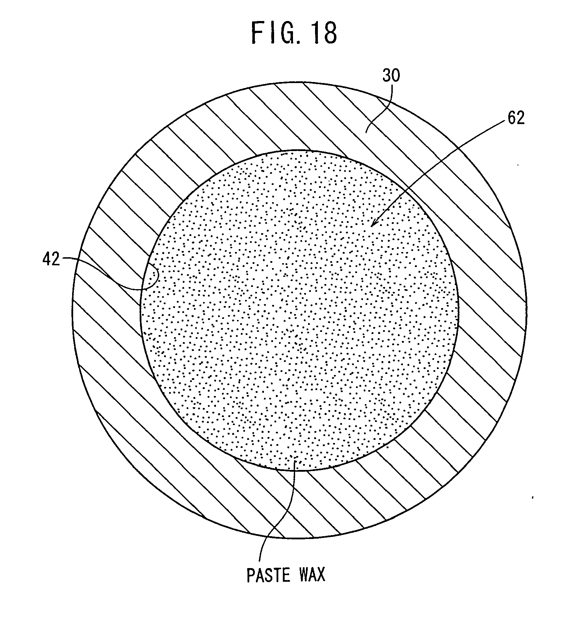

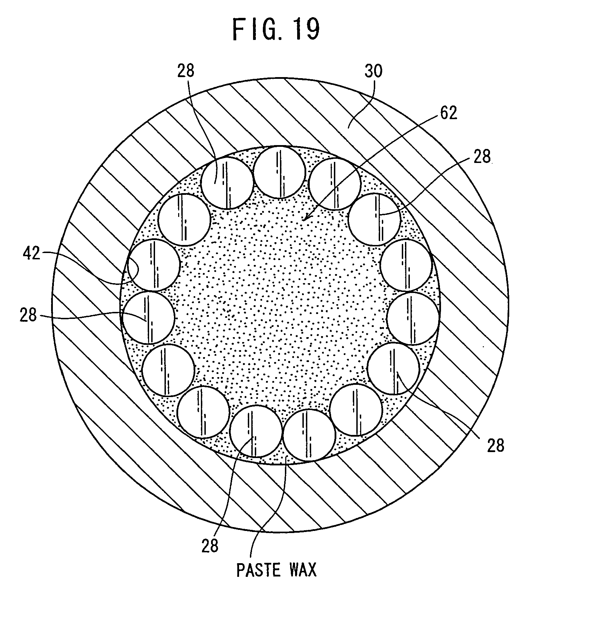

In a fourth method, the paste wax is injected into the entire hole 62 of the roller member 30 including the annular recess section 42 as shown in FIG. 18, and then the plurality of needle bearings 28 are inserted along the annular recess section 42 of the roller member 30 as shown in FIG. 19. Accordingly, the needle bearings 28 are retained by the paste wax. In the fourth method, the paste wax functions as a jig as well.

When any one of the first to fourth methods is adopted as described above, the transfer and the assembling can be preferably performed in the state in which the needle bearings 28 are retained on the roller member 30.

Next, a constant velocity universal joint according to a second embodiment will be explained. The same constitutive components as the constitutive components shown in FIGS. 1 to 19 are designated by the same reference numerals, and detailed explanation thereof will be omitted.

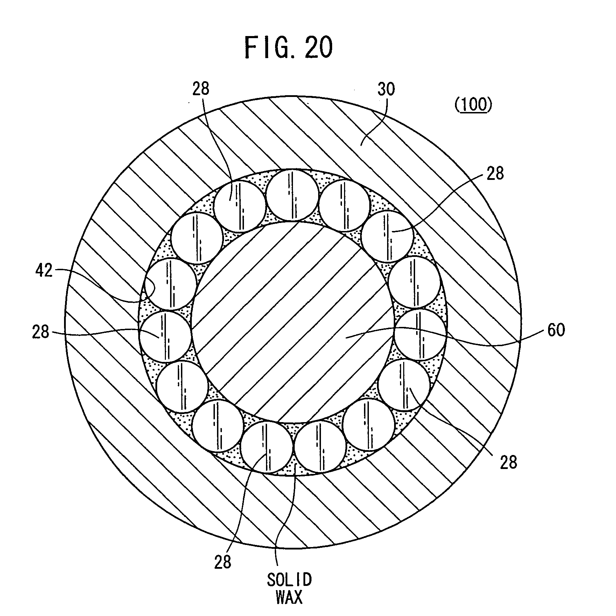

As shown in FIG. 20, the solid wax is used for the constant velocity universal joint 100 according to the second embodiment in place of the paste wax used for the constant velocity universal joint 10 according to the first embodiment. That is, in the constant velocity universal joint 100 according to the second embodiment, the needle bearings 28 are retained on the roller member 30 by the solid wax.

In the same manner as the paste wax, the solid wax is preferably selected so that the characteristics such as the coefficient of friction and the consistency of the lubricating grease to be enclosed in the outer cup 12 by the unillustrated joint boot are not deteriorated, and the joint boot itself is not deteriorated. In other words, it is preferable that the solid wax does not cause any chemical reaction with the lubricating grease and the joint boot. Specifically, the solid wax may be exemplified by "Paraffin Wax 140" produced by NIPPON SEIRO Co., Ltd.

In the second embodiment, it is also unnecessary to adopt the method of installing the needle bearings 28 based on the use of the keystone effect. The needle bearings 28 are prevented from any disengagement, and hence it is possible to realize the convenient operation for installing the needle bearings 28 to the inner diameter portion of the roller member 30.

Further, the solid wax is inexpensive. Therefore, in this embodiment, it is possible to manufacture the constant velocity universal joint 100 at low cost.

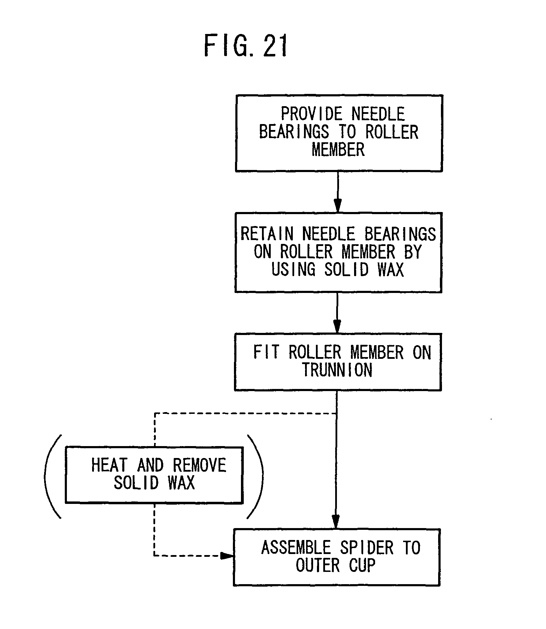

The constant velocity universal joint 100 constructed as described above can be produced as follows in accordance with a flow chart shown in FIG. 21.

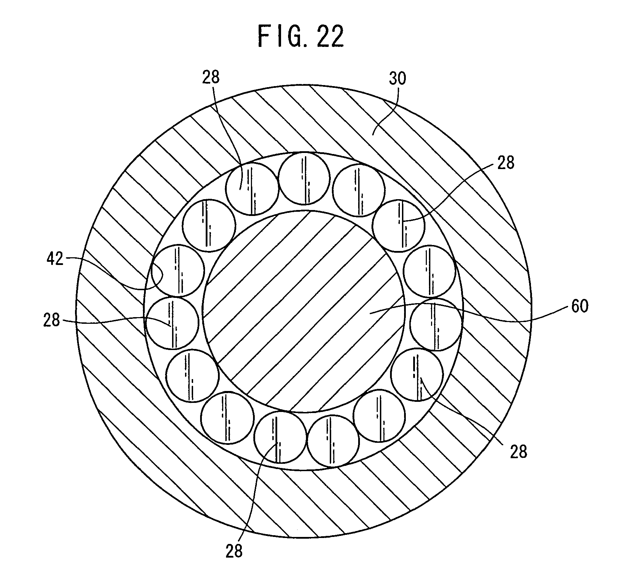

First, the plurality of needle bearings 28 are successively installed one by one along the wall surface of the annular recess section 42 formed on the inner diameter portion of the roller member 30. After that, as shown in FIG. 22, the needle bearings 28 are pressed by the jig 60 toward the annular recess section 42 so that the needle bearings 28 are not disengaged from the annular recess section 42.

On the other hand, the solid wax is prepared in order to retain the needle bearings 28 on the annular recess section 48.

Usually, the solid wax is an ester of fatty acid and alcohol, which is solid at ordinary temperature. Therefore, the solid wax is heated and melted. In this process, the temperature may be approximately about 70° to 95° C.

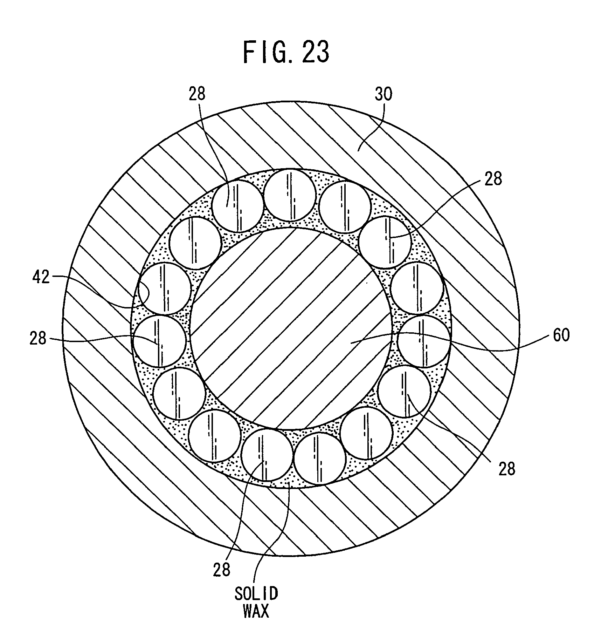

In order to supply the solid wax, for example, the roller member 30, to which the needle bearings 28 are installed, is immersed together with the jig 60 in a tank in which the solid wax in the melted state is stored. Alternatively, the solid wax may be poured or injected so that the outer surfaces of the needle bearings 28 are coated therewith. Further alternatively, the solid wax in the melted state may be applied to the outer surfaces of the needle bearings 28. Accordingly, as shown in FIG. 23, the gap between the annular recess section 42 of the roller member 30 and the outer circumferential surface of the jig 60 is filled with solid wax.

After supplying the solid wax as described above, the solid wax is cooled and solidified. Accordingly, the needle bearings 28 are rigidly retained on the wall surface of the annular recess section 42 by the aid of the cooled and solidified solid wax (see FIG. 20). Accordingly, the needle bearings 28 are prevented from being disengaged from the annular recess section 42 during the transport and assembling operations.

The amount of supply of the solid wax may be set to be an appropriate amount in view of various conditions including the size and the mass of the needle bearing 28, and the shock and the atmosphere temperature to be applied to the roller member 30. Accordingly, the satisfactory needle-retaining performance is provided, the satisfactory assembling performance is provided for the needle bearings 28, and it is possible to obtain the smooth rotational resistance of the needle bearings 28 at the initial stage.

The amount of supply of the solid wax may be also set on the basis of the heat capacities of the roller member 30 and the needle bearing 28 of the metal materials. That is, the solid wax, which is in the fluid state, is solidified as the heat is deprived by the needle bearings 28, the roller member 30, and the surrounding atmosphere. Therefore, the amount of supply of the solid wax is preferably adjusted so that the solid wax in an amount sufficient to retain the needle bearings 28 arrives at the inner diameter portion of the roller member 30, although part of the solid wax is solidified by the needle bearings 28 and the roller member 30, and the solid wax in the sufficient amount, which has arrived at the inner diameter portion of the roller member 30, is solidified in a short period of time of about several minutes by being naturally cooled. In this procedure, it is unnecessary to perform any special cooling step in order to solidify the solid wax. Therefore, it is possible to efficiently produce the constant velocity universal joint 100.

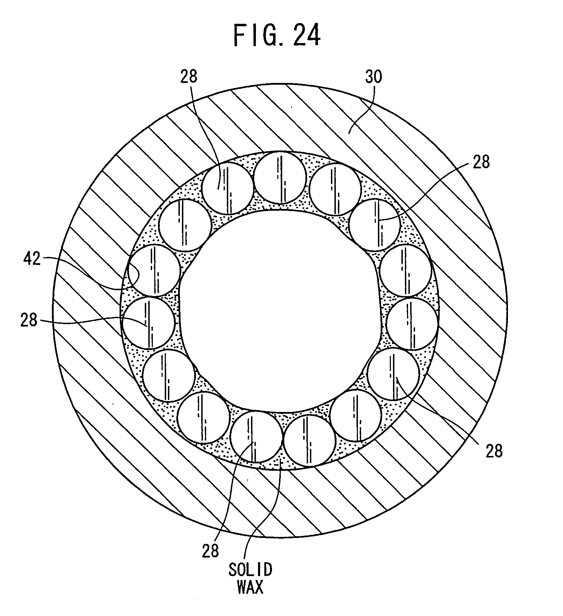

As shown in FIG. 24, in the roller member 30, the plurality of the needle bearings 28 have been retained on the inner diameter portion by the aid of the solid wax. Subsequently, the roller member 30 is removed from the jig 60. After that, as shown in FIG. 1, the roller member 30 is fitted on the trunnions 26a to 26c of the spider 24 together with the needle bearings 28. Accordingly, the operation for assembling the roller member 30 and the needle bearings 28 to the trunnions 26a to 26c is completed.

After that, if necessary, as indicated by broken lines shown in FIG. 21, the neighborhoods of the trunnions 26a to 26c are heated to the temperature at which the solid wax is melted. The solid wax is melted into a fluid to flow when the solid wax is heated as described above. In other words, the solid wax is removed.

The roller members 30 are engaged with the respective sliding movement sections 22a, 22b of the guide grooves 18a to 18c of the outer cup 12, and then the constant velocity universal joint 100 is covered with the joint boot. In this situation, the solid wax has been removed. Therefore, it is possible to reliably avoid change of quality which would be otherwise caused by the reaction of the solid wax with the joint boot and/or the lubricating grease enclosed in the joint boot.

The solid wax may be melted and removed by effecting the heating after the roller members 30 are engaged with the respective sliding movement sections 22a, 22b of the guide grooves 18a to 18c of the outer cup 12. In this procedure, the solid wax may be heated together with the outer cup 12.

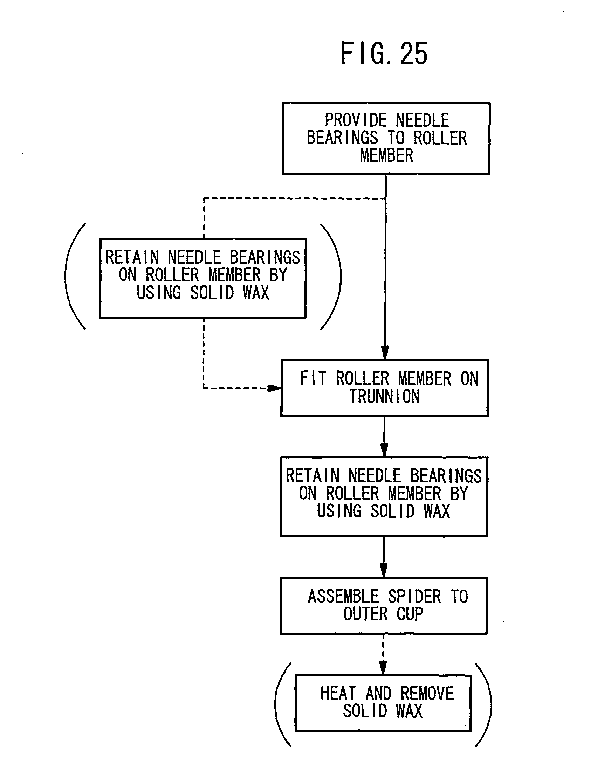

Alternatively, as illustrated in a flow chart shown in FIG. 25, the solid wax may be supplied after the roller members 30 are fitted onto the trunnions 26a to 26c together with the needle bearings 28.

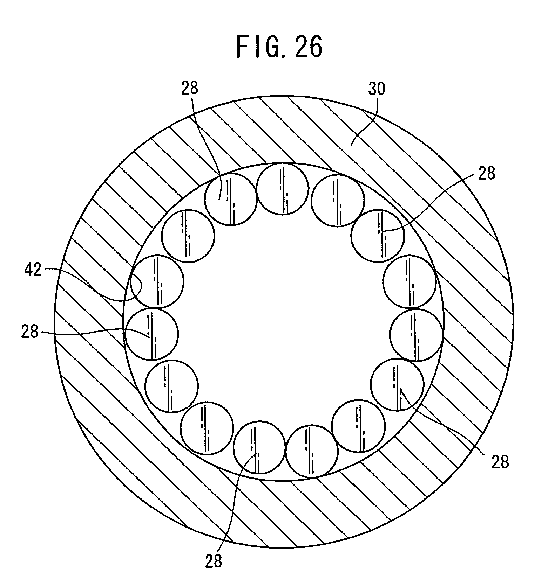

That is, first, as shown in FIG. 26, the needle bearings 28 are arranged on the inner diameter portion of the roller member 30. In this procedure, it is not necessarily indispensable to use the jig 60.

In this state, the roller member 30 is fitted on the trunnions 26a to 26c together with the needle bearings 28. In this procedure, no problem arises even when the fitted roller member 30 is located at any position on the trunnions 26a to 26c. However, the roller member 30 is preferably arranged at a position on the trunnions 26a to 26c corresponding to the respective sliding movement sections 22a, 22b of the guide groove 18a to 18c of the outer cup 12.

After that, the solid wax is supplied so that the needle bearings 28 are covered therewith to give the state as shown in FIG. 23. When the roller members 30 are arranged at the positions corresponding to the respective sliding movement sections 22a, 22b, the spider 24 can be easily engaged with the respective sliding movement sections 22a, 22b of the guide grooves 18a to 18c of the outer cup 12. The spider 24 has the trunnions 26a to 26c on which the roller members 30 are fitted. The needle bearings 28 are retained by the solid wax on the roller members 30.

Also in this procedure, as indicated by broken lines shown in FIG. 25, the needle bearings 28 may be retained on the roller member 30 by the aid of the solid wax before the roller member 30 is fitted and inserted into the trunnions 26a to 26c.

In any case, the neighborhoods of the trunnions 26a to 26c may be heated to the temperature at which the solid wax is melted to remove the solid wax, and then the roller members 30 may be engaged with the respective sliding movement sections 22a, 22b of the guide grooves 18a to 18c of the outer cup 12. Alternatively, the solid wax may be heated after the engagement together with the outer cup 12 to melt and remove the solid wax.

In any one of the production methods based on the flow charts shown in FIGS. 21 and 25, the constant velocity universal joint 100 can also be used without melting and removing the solid wax.

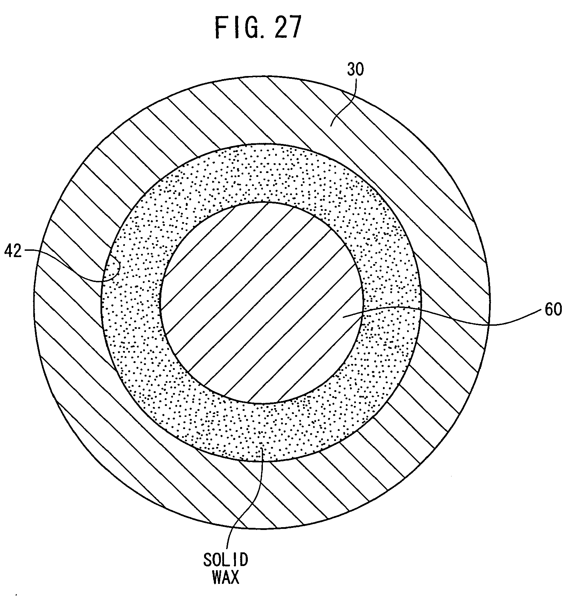

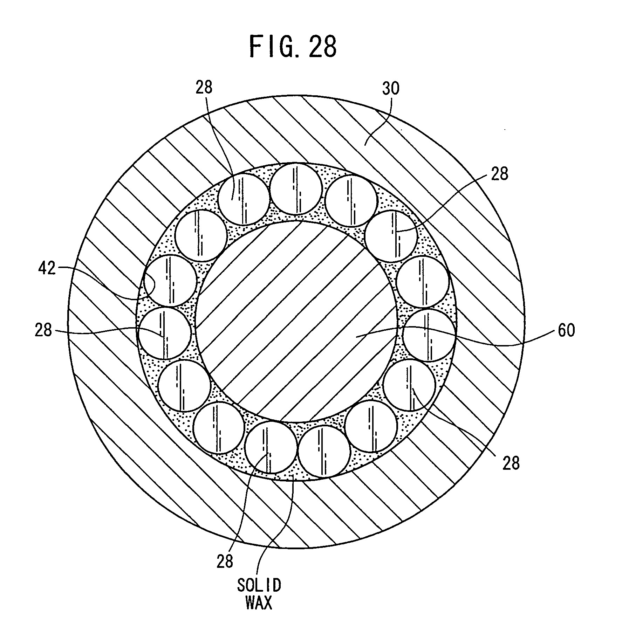

Further, as shown in FIG. 27, the melted solid wax in the liquid state may be supplied to the gap between the inner diameter portion of the roller member 30 and the jig 60 after fitting and inserting the roller member 30 on the jig 60. Then, the needle bearings 28 may be provided to the inner diameter portion as shown in FIG. 28. When the roller member 30 is thereafter removed together with the needle bearings 28 from the jig 60, the state as shown in FIG. 23 is obtained.

Alternatively, the melted solid wax may be adhered to the needle bearings 28, and then the needle bearings 28 may be provided to the inner diameter portion of the roller member 30. In this procedure, the respective needle bearings 28 may be immersed in the melted solid wax, and then the needle bearings 28 may be provided to the inner diameter portion of the roller member 30 before the solid wax is solidified.

The present invention is preferably adoptable when a running or driving mechanism of an automobile is assembled.

While the invention has been particularly shown and described with reference to preferred embodiments, it will be understood that variations and modifications can be effected thereto by those skilled in the art without departing from the spirit and scope of the invention as defined by the appended claims.

## Claims

1. A constant velocity universal joint (10) comprising a cylindrical outer member (12) which is connected to one transmission shaft and which is provided with a plurality of guide grooves (18a, 18b, 18c) separated from each other by predetermined distances and extending in an axial direction on an inner circumferential surface, and an inner member (16) which is inserted into an open inner space of said outer member (12) and which is connected to the other transmission shaft, said constant velocity universal joint (10) including:
a plurality of trunnions (26a, 26b, 26c) which are expanded toward said guide grooves (18a, 18b, 18c);
ring-shaped roller members (30) which contact said guide grooves (18a, 18b, 18c) and which are externally fitted to said trunnions (26a, 26b, 26c); and
a plurality of rolling members (28) which are interposed rollably between said trunnions (26a, 26b, 26c) and said roller members (30),
wherein said plurality of rolling members (28) are retained by paste wax which is adhered to inner diameter portions of said roller members (30) when said plurality of rolling members (28) are installed to said inner diameter portions of said roller members (30).

2. The constant velocity universal joint (10) according to claim 1, wherein said inner diameter portion of said roller member (30) has an L-shaped cross section by an annular recess section (42) and a single flange section (40) which protrudes radially inwardly.

3. The constant velocity universal joint (10) according to claim 2, wherein a holding member (43) is installed to said inner diameter portion of said roller member (30) having said L-shaped cross section.

4. The constant velocity universal joint (10) according to claim 1, wherein each of said trunnions (26a, 26b, 26c) has a columnar section (44) having a constant outer diameter, and a diametrally expanded section (46) which is larger than said outer diameter of said columnar section (44); and
a circumferential surface portion, which is disposed at a boundary between said columnar section (44) and said diametrally expanded section (46), has a radius of curvature which is larger than a one-tenth of an outer diameter of said columnar section (44).

5. The constant velocity universal joint (10) according to claim 1, wherein an annular member (54), which surrounds a circumferential surface portion of said trunnion (26a, 26b, 26c), is installed to a base of said trunnion (26a, 26b, 26c).

6. The constant velocity universal joint (10) according to claim 1, wherein said paste wax comprises an oil/fat component which has a consistency lower than that of a lubricating grease to be enclosed in said inner space portion of said outer member (12).

7. The constant velocity universal joint (10) according to claim 1, wherein a consistency of said paste wax, which is measured according to the Japanese Industrial Standard, is not less than 50 and less than 300.

8. A constant velocity universal joint (100) comprising a cylindrical outer member (12) which is connected to one transmission shaft and which is provided with a plurality of guide grooves (18a, 18b, 18c) separated from each other by predetermined distances and extending in an axial direction on an inner circumferential surface, and an inner member (16) which is inserted into an open inner space of said outer member (12) and which is connected to the other transmission shaft, said constant velocity universal joint (100) including:
a plurality of trunnions (26a, 26b, 26c) which are expanded toward said guide grooves (18a, 18b, 18c);
ring-shaped roller members (30) which contact said guide grooves (18a, 18b, 18c) and which are externally fitted to said trunnions (26a, 26b, 26c); and
a plurality of rolling members (28) which are interposed rollably between said trunnions (26a, 26b, 26c) and said roller members (30),
wherein solid wax is melted and supplied in a liquid state to inner diameter portions of said roller members (30), and said plurality of rolling members (28) are retained on said inner diameter portions of said roller members (30) by said solid wax which is thereafter solidified.

9. The constant velocity universal joint (100) according to claim 8, wherein said inner diameter portion of said roller member (30) has an L-shaped cross section by an annular recess section (42) and a single flange section (40) which protrudes radially inwardly.

10. The constant velocity universal joint (100) according to claim 9, wherein a holding member (43) is installed to said inner diameter portion of said roller member (30) having said L-shaped cross section.

11. The constant velocity universal joint (100) according to claim 8, wherein said trunnion (26a, 26b, 26c) has a columnar section (44) which has a constant outer diameter, and a diametrally expanded section (46) which is larger than said outer diameter of said columnar section (44); and
a circumferential surface portion, which is disposed at a boundary between said columnar section (44) and said diametrally expanded section (46), has a radius of curvature which is larger than a length of an outer diameter of said columnar section (44) multiplied by 0.1.

12. The constant velocity universal joint (100) according to claim 8, wherein an annular member (54), which surrounds a circumferential surface portion of said trunnion (26a, 26b, 26c), is installed to a base of said trunnion (26a, 26b, 26c).

13. A method of producing a constant velocity universal joint (10) comprising a cylindrical outer member (12) which is provided with a plurality of guide grooves (18a, 18b, 18c) separated from each other by predetermined distances and extending in an axial direction on an inner circumferential surface, a spider (24) which is provided in an open inner space of said outer member (12) and which is provided with a plurality of trunnions (26a, 26b, 26c) expanded toward said guide grooves (18a, 18b, 18c), and ring-shaped roller members (30) which contact said guide grooves (18a, 18b, 18c) and which are externally fitted to said trunnions (26a, 26b, 26c), said method of producing said constant velocity universal joint (10) comprising:
supplying paste wax to an inner diameter portion of said roller member (30);
providing a plurality of rolling members (28) to said inner diameter portion of said roller member (30) to retain said plurality of provided rolling members (28) on said roller member (30) by said paste wax; and
fitting said roller member (30) on which said rolling members (28) are retained to said trunnion (26a, 26b, 26c) of said spider (24).

14. A method of producing a constant velocity universal joint (10) comprising a cylindrical outer member (12) which is provided with a plurality of guide grooves (18a, 18b, 18c) separated from each other by predetermined distances and extending in an axial direction on an inner circumferential surface, a spider (24) which is provided in an open inner space of said outer member (12) and which is provided with a plurality of trunnions (26a, 26b, 26c) expanded toward said guide grooves (18a, 18b, 18c), and ring-shaped roller members (30) which contact said guide grooves (18a, 18b, 18c) and which are externally fitted to said trunnions (26a, 26b, 26c), said method of producing said constant velocity universal joint (10) comprising:
providing a plurality of rolling members (28) to said inner diameter portion of said roller member (30);
supplying paste wax to said inner diameter portion of said roller member (30) to retain said plurality of provided rolling members (28) on said roller member (30) by said paste wax; and
fitting said roller member (30) on which said rolling members (28) are retained to said trunnion (26a, 26b, 26c) of said spider (24).

15. A method of producing a constant velocity universal joint (100) comprising a cylindrical outer member (12) which is provided with a plurality of guide grooves (18a, 18b, 18c) separated from each other by predetermined distances and extending in an axial direction on an inner circumferential surface, a spider (24) which is provided in an open inner space of said outer member (12) and which is provided with a plurality of trunnions (26a, 26b, 26c) expanded toward said guide grooves (18a, 18b, 18c), and ring-shaped roller members (30) which contact said guide grooves (18a, 18b, 18c) and which are externally fitted to said trunnions (26a, 26b, 26c), said method of producing said constant velocity universal joint (100) comprising:
a first step of providing a plurality of rolling members (28) to said inner diameter portion of said roller member (30);
a second step of fitting said roller member (30) provided with said rolling members (28) to said trunnion (26a, 26b, 26c) of said spider (24); and
a third step of engaging said roller member (30) with said guide groove (18a, 18b, 18c),
wherein a solid wax-retaining step is performed such that melted solid wax is supplied to said plurality of provided rolling members (28), and said solid wax is
solidified to retain said rolling members (28) on said roller member (30).

16. The method of producing said constant velocity universal joint (100) according to claim 15, further comprising a solid wax-removing step of melding and removing said solid wax solidified in said solid wax-retaining step.
